# EUROPÄISCHE PATENTANMELDUNG

(11) **EP 1 396 928 A2**
(43) Veröffentlichungstag der Anmeldung: **10.03.2004**
(21) Anmeldenummer: 03103248.5
(22) Anmeldetag: 29.08.2003
(51) Int. Cl.: H02P 1/42

(54) **Elektrohandwerkzeugmaschine mit Sanftanlauf**

(30) Priorität: 04.09.2002 DE 10240719
(71) Anmelder: HILTI Aktiengesellschaft, 9494 Schaan (LI)
(72) Erfinder: Königbauer, Egon, 82223, Eichenau (DE)
(74) Vertreter: Wildi, Roland

(57) **Zusammenfassung**

Eine Elektrohandwerkzeugmaschine (1) mit einem als Taster ausgebildeten Motorschalter (2) und einem im Strompfad eines Elektromotors (3) angeordneten Stromsteller (4) mit einem Sanftanlaufeingang (5), in dessen Zweigstrom ein zeitbestimmender Kondensator (6) angeordnet ist, wobei zwischen dem Sanftanlaufeingang (5) und dem Kondensator (6) ein stromrichtungsabhängiges Bauelement (7) angeordnet ist.

## Beschreibung

Die Erfindung bezeichnet eine Elektrohandwerkzeugmaschine mit einem im Strompfad eines Elektromotors angeordneten Stromstellers mit einem beschalteten Sanftanlaufeingang.

Bei Elektrohandwerkzeugmaschinen ist zur Vermeidung von plötzlichen Drehmomenten ein über ca. 0,5 bis 2 sec gesteuert gedämpfter Sanftanlauf bis zur gewünschten Motordrehzahl üblich. Einige integrierte Stromsteller weisen zu diesem Zweck einen Sanftanlaufeingang auf, welcher über den Ladestrom eines extern beschalteten, zeitbestimmenden Kondensators gesteuert wird. Bei Elektrohandwerkzeugmaschinen mit einem als Taster ausgebildeten Motorschalter führt ein Umgreifen der Führungshand zum unbeabsichtigten Unterbrechen des Antriebs und somit trotz nachlaufendem Werkzeug wieder zum Sanftanlauf, bei welchem nicht die gewünschte Motordrehzahl zur Verfügung steht.

Nach der DE19609986 weist eine Schaltungsanordnung zur Steuerung eines Elektromotors einer Handwerkzeugmaschine einen im Strompfad angeordneten Stromsteller mit einem Eingang zum Sanftanlauf auf, welcher direkt mit einem zeitbestimmenden Kondensator sowie mit einer Diode als zusätzlichen Entladezweig für den Kondensator verbunden ist, wodurch ein wiederholtes, impulsartiges Nachlaufen erzielt wird.

Die Aufgabe der Erfindung besteht in der Realisierung einer Elektrohandwerkzeugmaschine mit einem Sanftanlauf, welcher bei kurzzeitigen Unterbrechungen deaktiviert ist.

Die Aufgabe wird im Wesentlichen durch die Merkmale der unabhängigen Ansprüche gelöst. Vorteilhafte Weiterbildungen ergeben sich aus den Unteransprüchen.

Im Wesentlichen weist eine Elektrohandwerkzeugmaschine mit einem als Taster ausgebildeten Motorschalter und einem im Strompfad eines Elektromotors angeordneten Stromsteller mit einem Sanftanlaufeingang, in dessen Zweigstrom ein zeitbestimmender Kondensator angeordnet ist, ein zwischen dem Sanftanlaufeingang und dem Kondensator angeordnetes stromrichtungsabhängiges Bauelement auf.

Durch das in Serie zu dem zeitbestimmenden Kondensator angeordnete, stromrichtungsabhängige Bauelement wird bei kurzzeitigen Unterbrechungen der Bestromung des Stromstellers, bei welchen das Potential des Sanftanlaufeingangs niederohmig abfällt, der Sanftanlaufeingang von dem zeitbestimmenden Kondensator entkoppelt, welcher somit seine Ladung im Wesentlichen bis zur Wiederbestromung des Stromstellers beibehält und somit keinen erneuten Sanftanlauf verursacht.

Vorteilhaft ist das stromrichtungsabhängige Bauelement als eine Diode ausgebildet, welche als Standardbauteil verfügbar ist.

Vorteilhaft ist parallel zu dem stromrichtungsabhängigen Bauelement ein zeitbestimmender Widerstand angeordnet, über welchen in Verbindung mit dem zeitbestimmenden Kondensator eine Entladezeitkonstante bestimmt ist, wodurch eine Minimalzeit bestimmt ist, nach welcher wieder ein erneuter Sanftanlauf einsetzt.

Vorteilhaft liegt die Entladezeitkonstante im Zeitbereich von 0,1 bis 1,0 sec, wodurch eine sanftanlauffreie Unterbrechung mit der Nachlaufzeit des Werkzeugs abgestimmt ist.

Die Erfindung wird bezüglich eines vorteilhaften Ausführungsbeispiels näher erläutert mit einer Darstellung als Elektrohandwerkzeugmaschine mit Sanftanlauf.

Nach der Darstellung weist eine Elektrohandwerkzeugmaschine 1 mit einem als Taster ausgebildeten Motorschalter 2 und einem im Strompfad eines Elektromotors 3 angeordneten Stromsteller 4 mit einem Sanftanlaufeingang 5, in dessen Zweigstrom ein zeitbestimmender Kondensator 6 angeordnet ist, ein zwischen dem Sanftanlaufeingang 5 und dem Kondensator 6 angeordnetes stromrichtungsabhängiges Bauelement 7 in Form einer Diode auf, deren Anode mit dem Sanftanlaufeingang 5 und deren Kathode mit dem Kondensator 6 verbunden ist, wobei parallel zu dem stromrichtungsabhängigen Bauelement 7 ein zeitbestimmender Widerstand 8 angeordnet ist. Die als Produkt der Kapazität C des zeitbestimmenden Kondensators 6 und des Widerstandswertes R des Widerstandes 8 gebildete Entladezeitkonstante T_{E} liegt im Zeitbereich von 0,1 bis 1,0 sec.

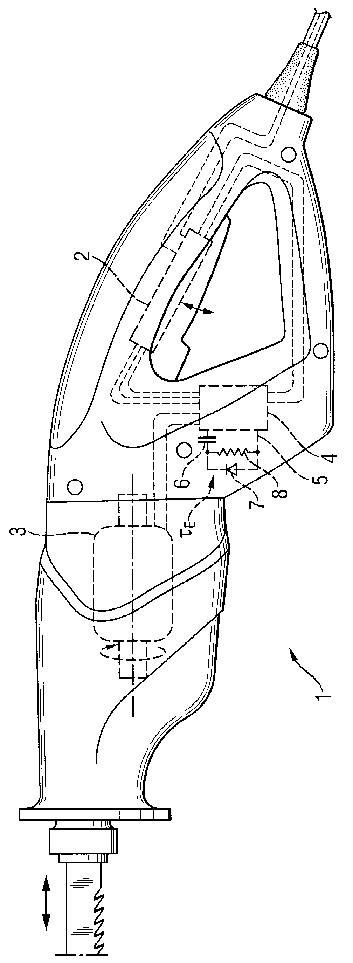

## Patentansprüche

1. Elektrohandwerkzeugmaschine mit einem als Taster ausgebildeten Motorschalter (2) und einem im Strompfad eines Elektromotors (3) angeordneten Stromsteller (4) mit einem Sanftanlaufeingang (5), in dessen Zweigstrom ein zeitbestimmender Kondensator (6) angeordnet ist, **dadurch gekennzeichnet, dass** zwischen dem Sanftanlaufeingang (5) und dem Kondensator (6) ein stromrichtungsabhängiges Bauelement (7) angeordnet ist.

2. Elektrohandwerkzeugmaschine nach Anspruch 1, **dadurch gekennzeichnet, dass** das stromrichtungsabhängige Bauelement (7) als eine Diode ausgebildet ist.

3. Elektrohandwerkzeugmaschine nach Anspruch 1, **dadurch gekennzeichnet, dass** parallel zu dem stromrichtungsabhängigen Bauelement (7) ein zeitbestimmender Widerstand (8) angeordnet ist.

4. Elektrohandwerkzeugmaschine nach Anspruch 1, **dadurch gekennzeichnet, dass** die Entladezeitkonstante (T_{E}) im Zeitbereich von 0,1 bis 1,0 sec liegt.
